# EUROPEAN PATENT APPLICATION

(11) **EP 4 760 085 A1**
(43) Date of publication of application: **17.06.2026**
(21) Application number: 24903215.2
(22) Date of filing: 31.07.2024
(51) Int. Cl.: F02D 19/08, F02M 21/02, F02M 25/00

(54) **CONTROL DEVICE FOR INTERNAL COMBUSTION ENGINE AND CONTROL METHOD FOR INTERNAL COMBUSTION ENGINE**

(30) Priority: 12.12.2023 JP 2023209229
(71) Applicant: MITSUBISHI HEAVY INDUSTRIES ENGINE & TURBOCHARGER, LTD., Sagamihara-shi, Kanagawa 252-5293 (JP)
(72) Inventor: IMAMORI, Yusuke, Tokyo 100-8332 (JP); FUSE, Azusa, Tokyo 100-8332 (JP); TANAKA, Takafumi, Sagamihara-shi, Kanagawa 252-5293 (JP); KOGURE, Ryosuke, Sagamihara-shi, Kanagawa 252-5293 (JP); KAKIZAKAI, Takehiko, Sagamihara-shi, Kanagawa 252-5293 (JP)
(74) Representative: Hoffmann Eitle
(86) International application number: PCT/JP2024/027292
(87) International publication number: WO 2025/126552

(57) **Abstract**

This control device for an internal combustion engine comprises: a nitrogen oxide amount acquisition unit that acquires the amount of nitrogen oxide in exhaust gas discharged from the internal combustion engine; an ammonia amount acquisition unit that acquires the amount of ammonia in the exhaust gas discharged from the internal combustion engine; and a flow rate control unit that gives a flow rate adjustment instruction for adjusting a flow rate of combustion gas guided to the internal combustion engine to a flow rate adjustment device that adjusts the flow rate of the combustion gas guided to the internal combustion engine such that the amount of the nitrogen oxide acquired by the nitrogen oxide amount acquisition unit and the amount of the ammonia acquired by the ammonia amount acquisition unit do not exceed threshold values, respectively, in a state in which the internal combustion engine is operated in a co-combustion operation mode in which both liquid fuel and ammonia gas are used as fuel.

## Description

### Technical Field

The present disclosure relates to a control device and a control method for an internal combustion engine.

The present application claims priority based on Japanese Patent Application No. 2023-209229 filed in Japan on December 12, 2023, the contents of which are incorporated herein by reference.

### Background Art

An internal combustion engine capable of performing a co-combustion operation in which both a liquid fuel such as diesel and an ammonia gas are used as fuel is known. In some internal combustion engines, an air excess ratio λ is set such that a discharge amount of nitrogen oxide and a discharge amount of ammonia satisfy a limit value under standard environmental conditions and under expected operation conditions (including transient operation conditions), and the amount of air introduced into the internal combustion engine to achieve the set air excess ratio λ is controlled by a device capable of operating the amount of air (for example, refer to PTL 1).

### Citation List

### Patent Literature

[PTL 1] Japanese Patent No. 7160226

### Summary of Invention

### Technical Problem

A relationship of the discharge amount of the nitrogen oxide and the discharge amount of the ammonia with respect to the air excess ratio λ may change depending on a change in a combustion state or exhaust gas catalyst performance which is caused by a change in environmental conditions or the like. Therefore, it is difficult to set the air excess ratio λ that can be satisfied under various conditions. In addition, in control for causing the air excess ratio λ to be close to a set value, there is a possibility that the discharge amount of the nitrogen oxide and the discharge amount of the ammonia exceed the limit value due to the change in the environmental conditions or the like.

In view of the above-described circumstances, an object of at least one embodiment of the present disclosure is to provide a control device and a control method for an internal combustion engine, which can control a discharge amount of nitrogen oxide and a discharge amount of ammonia to satisfy a limit value, even when a change in environmental conditions or the like occurs.

### Solution to Problem

According to at least one embodiment of the present disclosure, there is provided a control device for an internal combustion engine for controlling an operation of an internal combustion engine configured to switch between a plurality of operation modes, the plurality of operation modes including a single-fuel combustion operation mode in which a liquid fuel is used as fuel, and a co-combustion operation mode in which both the liquid fuel and an ammonia gas are used as fuel. The control device for an internal combustion engine includes a nitrogen oxide amount acquisition unit configured to acquire the amount of nitrogen oxide in an exhaust gas discharged from the internal combustion engine, an ammonia amount acquisition unit configured to acquire the amount of ammonia in the exhaust gas discharged from the internal combustion engine, and a flow rate control unit configured to give a flow rate adjustment instruction for adjusting a flow rate of a combustion gas guided to the internal combustion engine to a flow rate adjustment device configured to adjust the flow rate of the combustion gas guided to the internal combustion engine such that the amount of the nitrogen oxide acquired by the nitrogen oxide amount acquisition unit and the amount of the ammonia acquired by the ammonia amount acquisition unit do not exceed their respective threshold values, in a state where the internal combustion engine is operated in the co-combustion operation mode.

According to at least one embodiment of the present disclosure, there is provided a control method for an internal combustion engine for controlling an operation of an internal combustion engine configured to switch between a plurality of operation modes, the plurality of operation modes including a single-fuel combustion operation mode in which a liquid fuel is used as fuel, and a co-combustion operation mode in which both the liquid fuel and an ammonia gas are used as fuel. The control method for an internal combustion engine includes a nitrogen oxide amount acquisition step of acquiring the amount of nitrogen oxide in an exhaust gas discharged from the internal combustion engine, an ammonia amount acquisition step of acquiring the amount of ammonia in the exhaust gas discharged from the internal combustion engine, and a flow rate control step of giving a flow rate adjustment instruction for adjusting a flow rate of a combustion gas guided to the internal combustion engine to a flow rate adjustment device configured to adjust the flow rate of the combustion gas guided to the internal combustion engine such that the amount of the nitrogen oxide acquired in the nitrogen oxide amount acquisition step and the amount of the ammonia acquired in the ammonia amount acquisition step do not exceed their respective threshold values, in a state where the internal combustion engine is operated in the co-combustion operation mode.

### Advantageous Effects of Invention

According to at least one embodiment of the present disclosure, there is provided a control device and a control method for an internal combustion engine, which can control a discharge amount of nitrogen oxide and a discharge amount of ammonia to satisfy a limit value, even when a change in environmental conditions or the like occurs.

### Brief Description of Drawings

FIG. 1 is a schematic diagram of an internal combustion engine system including a control device for an internal combustion engine according to an embodiment of the present disclosure.
FIG. 2 is a view for describing a relationship between the amount of nitrogen oxide in an exhaust gas, the amount of ammonia in the exhaust gas, and an air excess ratio.
FIG. 3 is a view for describing a relationship between an exhaust gas temperature, the amount of ammonia in the exhaust gas, and the air excess ratio.
FIG. 4 is a control flow diagram of the internal combustion engine according to the embodiment of the present disclosure.
FIG. 5 is a control flow diagram of the internal combustion engine according to the embodiment of the present disclosure.
FIG. 6 is a view for describing a control map indicating a relationship between a rotation speed of the internal combustion engine, a load, and an operation condition capable of performing a co-combustion operation according to the embodiment of the present disclosure.
FIG. 7 is a control flow diagram of the internal combustion engine according to the embodiment of the present disclosure.

### Description of Embodiments

Hereinafter, some embodiments of the present disclosure will be described with reference to the accompanying drawings. However, dimensions, materials, shapes, and relative dispositions of components described as the embodiments or shown in the drawings are not intended to limit the scope of the present disclosure, and are merely examples for describing the present disclosure.

### (Internal Combustion Engine System)

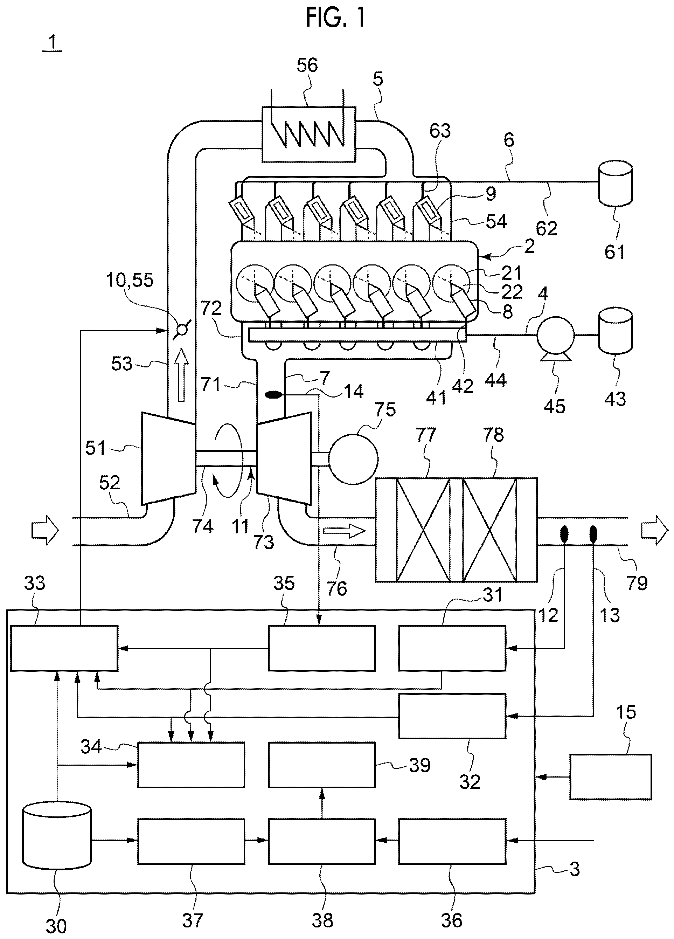

FIG. 1 is a schematic diagram of an internal combustion engine system 1 including a control device 3 for an internal combustion engine 2 according to an embodiment of the present disclosure. As shown in FIG. 1, the internal combustion engine system 1 includes the internal combustion engine (engine) 2 configured to generate power by combusting fuel inside the internal combustion engine 2, and the control device 3 configured to perform operation control and combustion control of the internal combustion engine 2. In the following embodiment, a case where the internal combustion engine 2 is a four-stroke engine will be described. However, some embodiments of the present disclosure are also applicable to a case where the internal combustion engine 2 is a two-stroke engine.

### (Internal Combustion Engine)

As shown in FIG. 1, the internal combustion engine 2 includes at least one cylinder 21 (in the shown example, a plurality of cylinders 21). Each of the plurality of cylinders 21 includes a combustion chamber 22 for combusting the fuel. Although not shown, the combustion chamber 22 is formed between a cylinder body and a piston accommodated inside the cylinder body.

The internal combustion engine 2 is configured to switch between a plurality of operation modes. The plurality of operation modes include a single-fuel combustion operation mode in which a liquid fuel is used as fuel and a co-combustion operation mode in which both the liquid fuel and an ammonia gas are used as fuel. The internal combustion engine 2 is configured to combust the liquid fuel and a combustion gas in the combustion chamber 22 of each of the plurality of cylinders 21, in a state where the internal combustion engine 2 is operated in the single-fuel combustion operation mode. The internal combustion engine 2 is configured to combust the liquid fuel, the ammonia gas, and the combustion gas in the combustion chamber 22 of each of the plurality of cylinders 21 in a state where the internal combustion engine 2 is operated in the co-combustion operation mode. For example, specific examples of the liquid fuel include diesel, gasoline, bioethanol, and the like.

As shown in FIG. 1, the internal combustion engine 2 further includes a liquid fuel introduction line 4, a combustion gas introduction line 5, an ammonia gas introduction line 6, an exhaust gas discharge line 7, a plurality of liquid fuel side injectors 8, and a plurality of ammonia side injectors 9.

### (Liquid Fuel Side Injector)

The plurality of liquid fuel side injectors 8 are used for injecting the liquid fuel into the combustion chamber 22 of each of the plurality of cylinders 21. The liquid fuel side injector 8 is individually provided for each of the cylinders 21. Each of the plurality of liquid fuel side injectors 8 includes a fuel injector configured to inject the liquid fuel into the corresponding combustion chamber 22.

### (Liquid Fuel Introduction Line)

The liquid fuel introduction line 4 forms a flow path for supplying the liquid fuel to each of the plurality of liquid fuel side injectors 8, and is formed by a pipe or the like, for example. In the shown embodiment, the liquid fuel introduction line 4 includes a common rail 41 capable of storing the liquid fuel, a plurality of branch pipes 42 for introducing the liquid fuel from the common rail 41 into each of the plurality of liquid fuel side injectors 8, a liquid fuel pipe 44 for guiding the liquid fuel from a supply source 43 of the liquid fuel (for example, a storage tank that stores the liquid fuel) to the common rail 41, and a pressure increasing device (for example, a pressure increasing pump) 45 configured to increase a pressure of the liquid fuel guided to the common rail 41.

One end of each of the plurality of branch pipes 42 is connected to the common rail 41, and the other end is connected to the liquid fuel side injector 8 corresponding to the branch pipe 42. One end of the liquid fuel pipe 44 is connected to the common rail 41, and the other end is connected to the supply source 43 of the liquid fuel. The pressure increasing device 45 is provided in the liquid fuel pipe 44. In a state where the internal combustion engine 2 is operated in the single-fuel combustion operation mode and the co-combustion operation mode, the liquid fuel whose pressure is increased by the pressure increasing device 45 is introduced into the liquid fuel side injector 8 via the liquid fuel introduction line 4.

### (Combustion Gas Introduction Line)

The combustion gas introduction line 5 forms a flow path for guiding the combustion gas to each of the plurality of combustion chambers 22, and is formed by a pipe or the like, for example. In the shown embodiment, the combustion gas introduction line 5 includes a compressor 51 configured to increase the pressure of the combustion gas, a first combustion gas pipe 52 for guiding the combustion gas to the compressor 51, a second combustion gas pipe 53 for guiding the combustion gas from the compressor 51, and a plurality of intake side branch pipes 54 for introducing the combustion gas to each of the plurality of combustion chambers 22 from the second combustion gas pipe 53.

One end of each of the plurality of intake side branch pipes 54 is connected to the common second combustion gas pipe 53, and the other end is connected to the combustion chamber 22 corresponding to the intake side branch pipe 54. Each one end of the first combustion gas pipe 52 and the second combustion gas pipe 53 is connected to the compressor 51. The other end (upstream end) of the first combustion gas pipe 52 may be open to an atmosphere, or may be connected to a storage tank that stores the combustion gas. In a state where the internal combustion engine 2 is operated in the single-fuel combustion operation mode and the co-combustion operation mode, the combustion gas whose pressure is increased by the compressor 51 is introduced into each of the plurality of combustion chambers 22 via the combustion gas introduction line 5.

The internal combustion engine 2 may include a throttle valve (flow rate adjustment device) 55 configured to adjust a flow rate of the combustion gas flowing through the second combustion gas pipe 53. The throttle valve 55 includes a valve disposed inside the second combustion gas pipe 53. The throttle valve 55 can increase the flow rate of the combustion gas flowing through the second combustion gas pipe 53 by increasing an opening degree of the valve, and can decrease the flow rate of the combustion gas flowing through the second combustion gas pipe 53 by decreasing the opening degree of the valve.

The internal combustion engine 2 may include an intercooler 56 for cooling the combustion gas flowing through the second combustion gas pipe 53. The intercooler 56 exchanges heat between the combustion gas flowing through the second combustion gas pipe 53 and a cooling heat medium, and cools the combustion gas flowing through the second combustion gas pipe 53. In the shown embodiment, the intercooler 56 is disposed on a downstream side of the throttle valve 55 in a flow direction of the combustion gas.

### (Ammonia Side Injector)

The plurality of ammonia side injectors 9 are used for injecting the ammonia gas into the intake side branch pipe 54 connected to each of the plurality of combustion chambers 22. The ammonia side injector 9 is individually provided for each of the intake side branch pipes 54. Each of the plurality of ammonia side injectors 9 includes a fuel injector configured to inject the ammonia gas into the corresponding intake side branch pipe 54.

### (Ammonia Gas Introduction Line)

The ammonia gas introduction line 6 forms a flow path for supplying the ammonia gas to each of the plurality of ammonia side injectors 9, and is formed by a pipe or the like, for example. In the shown embodiment, the ammonia gas introduction line 6 includes a supply source 61 of the ammonia gas (for example, a gas tank that stores the ammonia gas), an ammonia gas pipe 62 for guiding the ammonia gas from the supply source 61 of the ammonia gas, and a plurality of ammonia gas side branch pipes 63 for introducing the ammonia gas into each of the plurality of ammonia side injectors 9 from the ammonia gas pipe 62. The supply source 61 of the ammonia gas may store the ammonia in a gas state, or may store the ammonia in a liquid state.

One end of each of the plurality of ammonia gas side branch pipes 63 is connected to the common ammonia gas pipe 62, and the other end is connected to the ammonia side injector 9 corresponding to the ammonia gas side branch pipe 63. One end of the ammonia gas pipe 62 is connected to the supply source 61 of the ammonia gas. In a state where the internal combustion engine 2 is operated in the co-combustion operation mode, the ammonia gas is introduced into each of the plurality of intake side branch pipes 54 via the ammonia gas introduction line 6 and the ammonia side injector 9. The ammonia gas is guided to the combustion chamber 22 in a mixed gas state where the ammonia gas is mixed with the combustion gas, and is combusted in the mixed gas state. In the shown embodiment, the ammonia gas stored in the supply source 61 of the ammonia gas has a higher pressure than the combustion chamber 22, which is a supply destination of the gas, and is introduced into the combustion chamber 22 via the ammonia gas introduction line 6 due to a pressure difference.

### (Exhaust Gas Discharge Line)

The exhaust gas discharge line 7 forms a flow path through which the exhaust gas discharged from the internal combustion engine 2 flows, and is formed by a pipe or the like, for example. In the shown embodiment, the exhaust gas discharge line 7 includes an exhaust gas pipe 71 for guiding the exhaust gas, and a plurality of exhaust gas side branch pipes 72 for discharging the exhaust gas from each of the plurality of combustion chambers 22 to the exhaust gas pipe 71. One end of each of the plurality of exhaust gas side branch pipes 72 is connected to the common exhaust gas pipe 71, and the other end is connected to the combustion chamber 22 corresponding to the exhaust gas side branch pipe 72. The exhaust gas discharged from each of the plurality of combustion chambers 22 flows through the exhaust gas discharge line 7. When the internal combustion engine 2 is operated in the co-combustion operation mode, the exhaust gas flowing through the exhaust gas discharge line 7 may contain the nitrogen oxide and the ammonia.

The internal combustion engine 2 may include a turbine 73 provided in the exhaust gas discharge line 7 and configured to be driven by the exhaust gas flowing through the exhaust gas discharge line 7. In the shown embodiment, the turbine 73 is connected to one end of the exhaust gas pipe 71, and is configured to be driven by the exhaust gas guided through the exhaust gas pipe 71. The internal combustion engine 2 is equipped with a turbocharger 11 including the compressor 51, the turbine 73, and a rotary shaft 74 that coaxially connects the compressor 51 and the turbine 73. The turbine 73 is attached to one side of the rotary shaft 74, the compressor 51 is attached to the other side, and the rotary shaft 74 rotates together with the compressor 51 in conjunction with the rotation of the turbine 73. In addition, the internal combustion engine 2 may include a generator 75 mechanically connected to a drive shaft of the turbine 73 and configured to convert a rotational force of the turbine 73 into electric power.

The internal combustion engine 2 may include a denitrification catalyst 77 for removing the nitrogen oxide in the exhaust gas flowing through the exhaust gas discharge line 7, and an ammonia decomposition catalyst 78 for removing the ammonia in the exhaust gas flowing through the exhaust gas discharge line 7. In the shown embodiment, the denitrification catalyst 77 and the ammonia decomposition catalyst 78 are disposed on a downstream side of the turbine 73 in the flow direction of the exhaust gas of the exhaust gas discharge line 7. The exhaust gas discharge line 7 further includes an exhaust gas connection pipe 76 for guiding the exhaust gas from the turbine 73 to the denitrification catalyst 77 and the ammonia decomposition catalyst 78, and an exhaust gas discharge pipe 79 for discharging the exhaust gas passing through the denitrification catalyst 77 and the ammonia decomposition catalyst 78. A downstream end of the exhaust gas discharge pipe 79 may be open to the atmosphere, or may be connected to a facility for discharging the exhaust gas, such as a chimney.

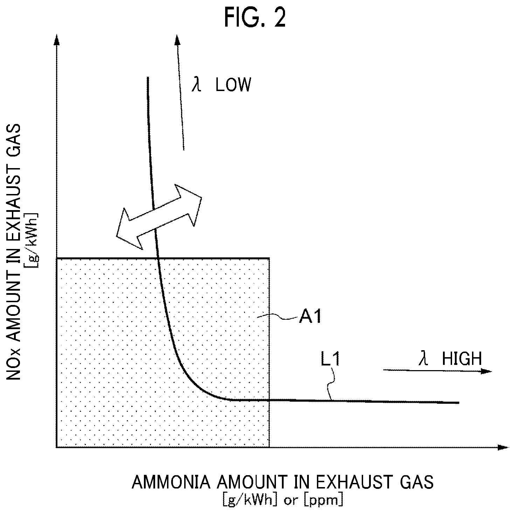

FIG. 2 is a view for describing a relationship between the amount of the nitrogen oxide in the exhaust gas, the amount of the ammonia in the exhaust gas, and the air excess ratio. FIG. 2 shows a graph in which the amount of the nitrogen oxide (nitrogen oxide discharge amount) in the exhaust gas flowing through the exhaust gas discharge line 7 is represented by a vertical axis and the amount of the ammonia (ammonia discharge amount) in the exhaust gas flowing through the exhaust gas discharge line 7 is represented by a horizontal axis. The graph shown in FIG. 2 shows a target region A1 in which both the nitrogen oxide discharge amount and the ammonia discharge amount are equal to or smaller than a limit value, and a curve L1 indicating a relationship of the nitrogen oxide discharge amount and the ammonia discharge amount with respect to the air excess ratio λ. As shown by the curve L1 in FIG. 2, when the air excess ratio λ is raised and the flow rate of the combustion gas introduced into the combustion chamber 22 is increased, the nitrogen oxide discharge amount can be decreased, but the ammonia discharge amount tends to increase. In addition, when the air excess ratio λ is lowered and the flow rate of the combustion gas introduced into the combustion chamber 22 is decreased, the ammonia discharge amount can be decreased, but the nitrogen oxide discharge amount tends to increase.

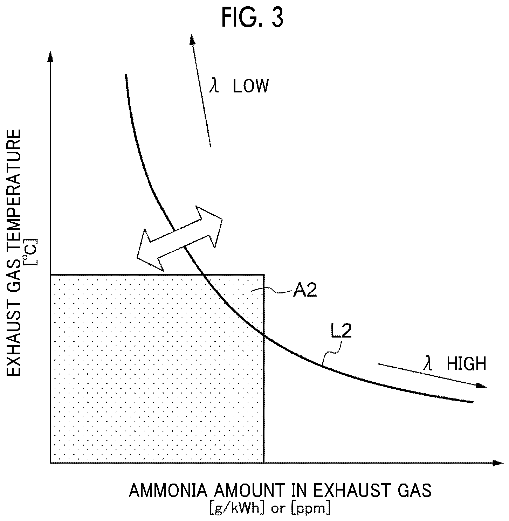

FIG. 3 is a view for describing a relationship between the exhaust gas temperature, the amount of the ammonia in the exhaust gas, and the air excess ratio. FIG. 3 shows a graph in which the temperature (exhaust gas temperature) of the exhaust gas flowing through the exhaust gas discharge line 7 is represented by the vertical axis and the amount (ammonia discharge amount) of the ammonia in the exhaust gas flowing through the exhaust gas discharge line 7 is represented by the horizontal axis. The graph shown in FIG. 3 shows a target region A2 in which both the exhaust gas temperature and the ammonia discharge amount are equal to or smaller than the limit value, and a curve L2 indicating a relationship between the exhaust gas temperature and the ammonia discharge amount with respect to the air excess ratio λ. As shown by the curve L2 in FIG. 3, when the air excess ratio λ is raised and the flow rate of the combustion gas introduced into the combustion chamber 22 is increased, the exhaust gas temperature can be decreased, but the ammonia discharge amount tends to increase. In addition, when the air excess ratio λ is lowered and the flow rate of the combustion gas introduced into the combustion chamber 22 is decreased, the ammonia discharge amount can be decreased, but the exhaust gas temperature tends to increase.

The curve L1 shown in FIG. 2 and the curve L2 shown in FIG. 3 (relationship of the exhaust gas temperature, the nitrogen oxide discharge amount, and the ammonia discharge amount with respect to the air excess ratio λ) may change depending on a change in a combustion state or exhaust gas catalyst performance when a change in environmental conditions, unexpected transient operation, device deterioration, or the like occurs, as indicated by arrows in the drawing. For example, when the exhaust gas catalyst (denitrification catalyst 77 and ammonia decomposition catalyst 78) is provided in the exhaust gas discharge line 7, the exhaust gas catalyst highly depends on the temperature, and shows a complicated behavior such as a rapid increase in the nitrogen oxide discharge amount during an increase in the exhaust gas temperature when the air excess ratio λ is lowered. Therefore, there is a possibility as follows. The nitrogen oxide discharge amount or the ammonia discharge amount may exceed the limit value even when the air excess ratio λ is determined such that the nitrogen oxide discharge amount and the ammonia discharge amount satisfy the limit value (are equal to or smaller than the limit value) under standard environmental conditions, and the flow rate of the combustion gas introduced into the combustion chamber 22 is adjusted to achieve the determined air excess ratio λ. In addition, it is difficult to determine in advance the air excess ratio λ that can correspond to a change in the environmental conditions, the unexpected transient operation, the device deterioration, or the like.

The control device 3 of the internal combustion engine 2 is an electronic control unit that controls an operation of each device included in the internal combustion engine 2, such as the liquid fuel side injector 8, the ammonia side injector 9, and the throttle valve 55 (flow rate adjustment device 10). The control device 3 may be configured as a microcomputer including a central processing unit (CPU) including a processor, a random-access memory (RAM), a read-only memory (ROM), an I/O interface, and the like. In the shown embodiment, the control device 3 includes an engine control unit. In some other embodiments, the control device 3 may be mounted as one of functions (programs or circuits) included in the engine control unit. In addition, in some other embodiments, the control device 3 may be configured as an electronic control unit different from the engine control unit.

As shown in FIG. 1, the control device 3 for the internal combustion engine 2 according to some embodiments includes a nitrogen oxide amount acquisition unit 31, an ammonia amount acquisition unit 32, and a flow rate control unit 33. The nitrogen oxide amount acquisition unit 31 is configured to acquire the amount of the nitrogen oxide (nitrogen oxide discharge amount) in the exhaust gas discharged from the internal combustion engine 2. The ammonia amount acquisition unit 32 is configured to acquire the amount of the ammonia (ammonia discharge amount) in the exhaust gas discharged from the internal combustion engine 2. A control method for the internal combustion engine 2 according to some embodiments includes a nitrogen oxide amount acquisition step of acquiring a nitrogen oxide discharge amount and an ammonia amount acquisition step of acquiring an ammonia discharge amount. In the following embodiment, the nitrogen oxide amount acquisition step is performed by the nitrogen oxide amount acquisition unit 31 of the control device 3, and the ammonia amount acquisition step is performed by the ammonia amount acquisition unit 32 of the control device 3.

In the shown embodiment, the internal combustion engine 2 includes a nitrogen oxide sensor 12 that measures the amount of the nitrogen oxide in the exhaust gas flowing through the exhaust gas discharge line 7, and an ammonia sensor 13 that measures the amount of the ammonia in the exhaust gas flowing through the exhaust gas discharge line 7. The amount of the nitrogen oxide in the exhaust gas measured by the nitrogen oxide sensor 12 is sent from the nitrogen oxide sensor 12 to the nitrogen oxide amount acquisition unit 31 at every moment. The ammonia amount acquisition unit 32 is configured such that the amount of the ammonia in the exhaust gas measured by the ammonia sensor 13 is sent from the ammonia sensor 13 at every moment. The nitrogen oxide sensor 12 and the ammonia sensor 13 are not limited to those which physically measure the amount of a detection target (nitrogen oxide and ammonia) in the exhaust gas, and may calculate the amount of the detection target in the exhaust gas by calculation, or may estimate the amount of the detection target from a measurement value of other sensors.

The flow rate control unit 33 is configured to give a flow rate adjustment instruction for adjusting the flow rate of the combustion gas guided to the internal combustion engine 2 to the flow rate adjustment device 10 configured to adjust the flow rate of the combustion gas guided to the internal combustion engine 2 such that the amount of the nitrogen oxide acquired by the nitrogen oxide amount acquisition unit 31 and the amount of the ammonia acquired by the ammonia amount acquisition unit 32 do not exceed their respective threshold values, in a state where the internal combustion engine 2 is operated in the co-combustion operation mode. In the shown embodiment, the flow rate adjustment device 10 is the throttle valve 55. However, in other embodiments, the flow rate adjustment device 10 may be a device including a flow rate adjustment mechanism other than the throttle valve 55. Examples of the device including the flow rate adjustment mechanism specifically include an electric compressor (not shown) provided in the combustion gas introduction line 5, a variable nozzle (not shown) that changes an exhaust gas passage area of a variable displacement turbocharger provided in the exhaust gas discharge line 7, and the like. The control method for the internal combustion engine 2 according to some embodiments includes a flow rate control step of giving a flow rate adjustment instruction for adjusting the flow rate of the combustion gas guided to the internal combustion engine 2 to the flow rate adjustment device 10. In the following embodiment, the flow rate control step is performed by the flow rate control unit 33 of the control device 3.

Since the combustion state or the like also changes when a change in the environmental conditions or the like occurs, the relationship of the discharge amount of the nitrogen oxide and the discharge amount of the ammonia with respect to the air excess ratio λ always changes. As a control parameter for adjusting the flow rate of the combustion gas guided to the internal combustion engine 2, instead of the air excess ratio λ, the control device 3 uses the amount of the nitrogen oxide acquired by the nitrogen oxide amount acquisition unit 31 and the amount of the ammonia acquired by the ammonia amount acquisition unit 32. The control device 3 can adjust the flow rate of the combustion gas such that the discharge amount of nitrogen oxide and the discharge amount of the ammonia satisfy the limit value even when a change in environmental conditions or the like occurs.

As shown in FIG. 1, the internal combustion engine 2 may include a selection device (switch) 15 for manually selecting the operation mode of the internal combustion engine 2. The control device 3 is configured to perform operation control or combustion control of the internal combustion engine 2 which corresponds to information (signal) relating to the operation mode sent from the selection device 15. When the internal combustion engine 2 is operated in the co-combustion operation mode, the control device 3 monitors each of the amount of the nitrogen oxide acquired by the nitrogen oxide amount acquisition unit 31 and the amount of the ammonia acquired by the ammonia amount acquisition unit 32, which changes at every moment.

In some embodiments, as shown in FIG. 1, the nitrogen oxide amount acquisition unit 31 is configured to acquire the amount of the nitrogen oxide in the exhaust gas flowing on the downstream side of the denitrification catalyst 77 for removing the nitrogen oxide in the exhaust gas discharge line 7. In the shown embodiment, the nitrogen oxide sensor 12 is provided in the exhaust gas discharge pipe 79 through which the exhaust gas passing through the denitrification catalyst 77 and the ammonia decomposition catalyst 78 flows, and measures the amount of the nitrogen oxide in the exhaust gas flowing through the exhaust gas discharge pipe 79. The nitrogen oxide amount acquisition unit 31 acquires a measurement result of the nitrogen oxide sensor 12.

The amount of the nitrogen oxide in the exhaust gas flowing on the downstream side of the denitrification catalyst 77 of the exhaust gas discharge line 7 is equal to the nitrogen oxide discharge amount actually discharged into the atmosphere. The amount of the nitrogen oxide in the exhaust gas flowing on the downstream side of the denitrification catalyst 77 of the exhaust gas discharge line 7, which is acquired by the nitrogen oxide amount acquisition unit 31, is used for the control in the control device 3. In this manner, the control device 3 can more appropriately perform the control in which the nitrogen oxide discharge amount satisfies the limit value.

In some embodiments, as shown in FIG. 1, the ammonia amount acquisition unit 32 is configured to acquire the amount of the ammonia in the exhaust gas flowing on the downstream side of the ammonia decomposition catalyst 78 for removing the ammonia in the exhaust gas discharge line 7. In the shown embodiment, the ammonia sensor 13 is provided in the exhaust gas discharge pipe 79 through which the exhaust gas passing through the denitrification catalyst 77 and the ammonia decomposition catalyst 78 flows, and measures the amount of the ammonia in the exhaust gas flowing through the exhaust gas discharge pipe 79. The ammonia amount acquisition unit 32 acquires a measurement result of the ammonia sensor 13.

The amount of the ammonia in the exhaust gas flowing on the downstream side of the ammonia decomposition catalyst 78 of the exhaust gas discharge line 7 is equal to the ammonia discharge amount actually discharged into the atmosphere. The amount of ammonia in the exhaust gas flowing on the downstream side of the ammonia decomposition catalyst 78 of the exhaust gas discharge line 7, which is acquired by the ammonia amount acquisition unit 32, is used for the control in the control device 3. In this manner, the control device 3 can more appropriately perform the control such that the ammonia discharge amount satisfies the limit value.

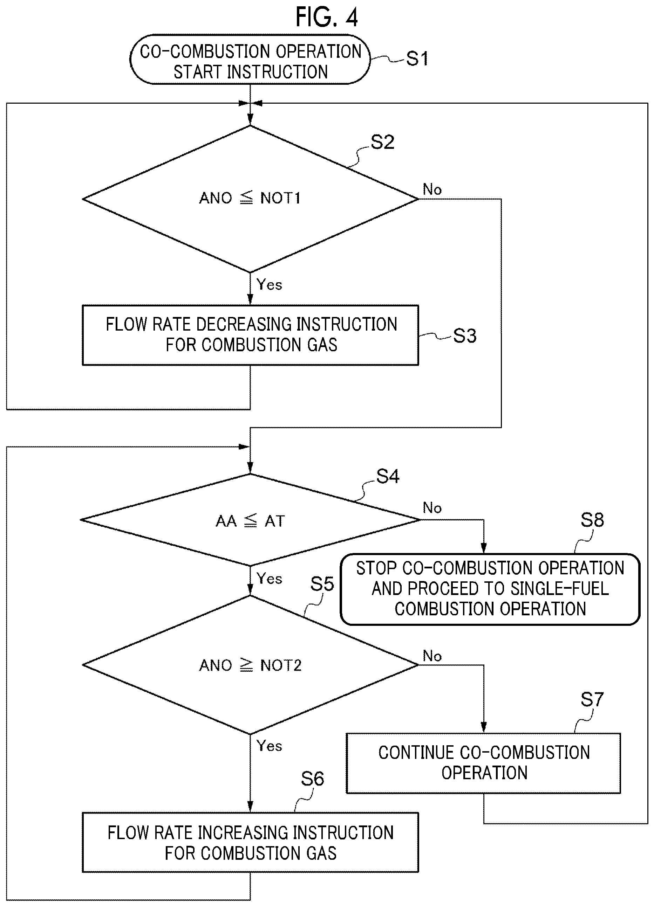

FIG. 4 is a control flow diagram of the internal combustion engine according to the embodiment of the present disclosure. The internal combustion engine 2 is operated in the co-combustion operation mode after receiving a co-combustion operation start instruction from the control device 3 (Step S1).

### (Flow Rate Decrease Control)

In some embodiments, as shown in FIG. 4, the flow rate control unit 33 is configured to give a flow rate decreasing instruction for decreasing the flow rate of the combustion gas guided to the internal combustion engine 2 to the flow rate adjustment device 10 (Step S3), when a flow rate decreasing condition is satisfied, the flow rate decreasing condition indicating that the amount ANO of the nitrogen oxide acquired by the nitrogen oxide amount acquisition unit 31 is equal to or smaller than a first nitrogen oxide threshold value NOT1 ("Yes" in Step S2), in a state where the internal combustion engine 2 is operated in the co-combustion operation mode. The flow rate of the combustion gas guided to the internal combustion engine 2 can be decreased in a range in which the amount ANO of the nitrogen oxide acquired by the nitrogen oxide amount acquisition unit 31 does not exceed the first nitrogen oxide threshold value NOT1. Since the flow rate of the combustion gas guided to the internal combustion engine 2 is decreased, the discharge amount of the ammonia can be decreased as much as possible while the discharge amount of the nitrogen oxide can satisfy the limit value.

In the embodiment shown in FIG. 4, when the amount ANO of the nitrogen oxide acquired by the nitrogen oxide amount acquisition unit 31 exceeds the first nitrogen oxide threshold value NOT1 ("No" in Step S2), the control device 3 determines whether the amount AA of the ammonia acquired by the ammonia amount acquisition unit 32 is equal to or smaller than an ammonia threshold value AT (Step S4).

### (Proceeding to Single-Fuel Combustion Operation Mode)

In some embodiments, the control device 3 of the internal combustion engine 2 includes a first operation mode control unit 34. As shown in FIG. 4, the first operation mode control unit 34 is configured to switch the operation mode of the internal combustion engine 2 to the single-fuel combustion operation mode, when a co-combustion operation stopping condition is satisfied, the co-combustion operation stopping condition including both a determination condition ("No" in Step S2) that the amount ANO of the nitrogen oxide acquired by the nitrogen oxide amount acquisition unit 31 exceeds the first nitrogen oxide threshold value NOT1 and a determination condition ("No" in Step S4) that the amount AA of the ammonia acquired by the ammonia amount acquisition unit 32 exceeds the ammonia threshold value AT, in a state where the internal combustion engine 2 is operated in the co-combustion operation mode. The internal combustion engine 2 receives an instruction from the control device 3, stops the co-combustion operation, and proceeds to the single-fuel combustion operation (Step S8). The control method for the internal combustion engine 2 according to some embodiments includes a first operation mode control step of switching the operation mode of the internal combustion engine 2 to the single-fuel combustion operation mode, when the above-described co-combustion operation stopping condition is satisfied. In the following embodiment, the first operation mode control step is performed by the first operation mode control unit 34 of the control device 3.

When the above-described co-combustion operation stopping condition is satisfied, in the adjustment of the flow rate of the combustion gas, it is difficult to continue the co-combustion operation such that both the discharge amount of the nitrogen oxide and the discharge amount of the ammonia satisfy the limit value. When the above-described co-combustion operation stopping condition is satisfied, the control device 3 promptly stops the co-combustion operation, and switches the operation mode to the single-fuel combustion operation. In this manner, the discharge amount of the nitrogen oxide and the discharge amount of the ammonia can be promptly improved (decreased).

### (Flow Rate Increase Control)

In some embodiments, as shown in FIG. 4, the flow rate control unit 33 is configured to give a flow rate increasing instruction for increasing the flow rate of the combustion gas guided to the internal combustion engine 2 to the flow rate adjustment device 10 (Step S6), when a flow rate increasing condition is satisfied, the flow rate increasing condition including both a determination condition that the amount AA of the ammonia acquired by the ammonia amount acquisition unit 32 is equal to or smaller than the ammonia threshold value AT ("Yes" in Step S4) and a determination condition that the amount ANO of the nitrogen oxide acquired by the nitrogen oxide amount acquisition unit 31 exceeds the second nitrogen oxide threshold value NOT2 ("Yes" in Step S5), in a state where the internal combustion engine 2 is operated in the co-combustion operation mode. The second nitrogen oxide threshold value NOT2 is the same value as the first nitrogen oxide threshold value NOT1, or is a value greater than the first nitrogen oxide threshold value NOT1.

The control device 3 decreases the flow rate of the combustion gas guided to the internal combustion engine 2 as much as possible such that the ammonia discharge amount can be decreased as much as possible. However, the nitrogen oxide discharge amount may suddenly increase due to a change in environmental conditions or the like. When the amount ANO of the nitrogen oxide acquired by the nitrogen oxide amount acquisition unit 31 exceeds the second nitrogen oxide threshold value NOT2, the flow rate increasing instruction is given. In this manner, the flow rate of the combustion gas guided to the internal combustion engine 2 can be increased such that the discharge amount of the nitrogen oxide satisfies the limit value.

As shown in FIG. 4, when it is determined whether or not the flow rate increasing condition is satisfied, in a case where the amount AA of the ammonia acquired by the ammonia amount acquisition unit 32 is equal to or smaller than the ammonia threshold value AT ("Yes" in Step S4) and the amount ANO of the nitrogen oxide acquired by the nitrogen oxide amount acquisition unit 31 is smaller than the second nitrogen oxide threshold value NOT2 ("No" in Step S5), the control device 3 continues the co-combustion operation without giving the above-described flow rate increasing instruction (Step S7).

In some of the embodiments, the control device 3 adjusts the flow rate of the combustion gas introduced into the combustion chamber 22 such that the nitrogen oxide discharge amount and the ammonia discharge amount satisfy the limit value. When the temperature of the exhaust gas flowing through the exhaust gas discharge line 7 is excessively high, there is a possibility that a device, a pipe, or the like forming the exhaust gas discharge line 7 is damaged by heat of the exhaust gas. Therefore, it is preferable that the control device 3 adjusts the flow rate of the combustion gas introduced into the combustion chamber 22 such that the exhaust gas temperature also satisfies the limit value.

In some embodiments, as shown in FIG. 1, the control device 3 of the internal combustion engine 2 includes an exhaust gas temperature acquisition unit 35 configured to acquire the temperature of the exhaust gas flowing through the exhaust gas discharge line 7. In the shown embodiment, the internal combustion engine 2 includes a temperature sensor 14 that measures the temperature of the exhaust gas flowing through the exhaust gas discharge line 7. The exhaust gas temperature acquisition unit 35 is configured to receive the temperature of the exhaust gas measured by the temperature sensor 14 at every moment from the temperature sensor 14. The temperature sensor 14 is not limited to those which physically measure the exhaust gas temperature, and may calculate the exhaust gas temperature by calculation, or may estimate the exhaust gas temperature from a measurement value of other sensors. The control device 3 monitors the exhaust gas temperature acquired by the exhaust gas temperature acquisition unit 35, which changes at every moment, when the internal combustion engine 2 is operated in the co-combustion operation mode. The control method for the internal combustion engine 2 according to some embodiments includes an exhaust gas temperature acquisition step of acquiring the temperature of the exhaust gas flowing through the exhaust gas discharge line 7. In the following embodiment, the exhaust gas temperature acquisition step is performed by the exhaust gas temperature acquisition unit 35.

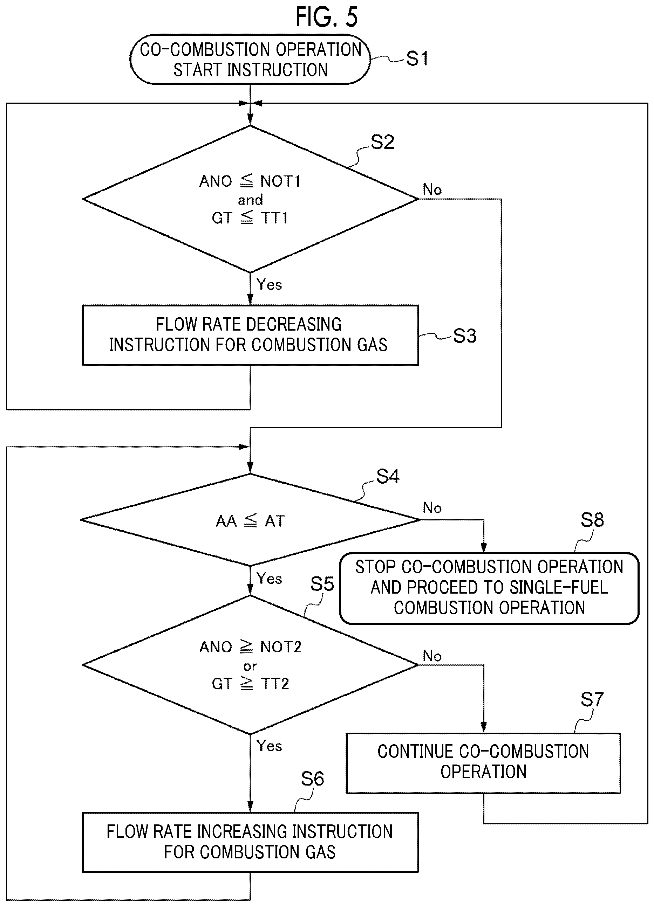

FIG. 5 is a control flow diagram of the internal combustion engine according to the embodiment of the present disclosure. In some embodiments, the flow rate decreasing condition further includes a determination condition that the temperature GT of the exhaust gas acquired by the exhaust gas temperature acquisition unit 35 is equal to or smaller than the first temperature threshold value TT1. That is, as shown in FIG. 5, the flow rate control unit 33 is configured to give the flow rate decreasing instruction for decreasing the flow rate of the combustion gas guided to the internal combustion engine 2 to the flow rate adjustment device 10 (Step S3), when the flow rate decreasing condition is satisfied, the flow rate decreasing condition including both a determination condition that the amount ANO of the nitrogen oxide acquired by the nitrogen oxide amount acquisition unit 31 is equal to or smaller than the first nitrogen oxide threshold value NOT1 and a determination condition that the temperature GT of the exhaust gas acquired by the exhaust gas temperature acquisition unit 35 is equal to or smaller than the first temperature threshold value TT1 ("Yes" in Step S2), in a state where the internal combustion engine 2 is operated by the co-combustion operation mode.

In this case, the flow rate of the combustion gas guided to the internal combustion engine 2 can be decreased in a range where the amount ANO of the nitrogen oxide acquired by the nitrogen oxide amount acquisition unit 31 does not exceed the first nitrogen oxide threshold value NOT1 and the temperature GT of the exhaust gas acquired by the exhaust gas temperature acquisition unit 35 does not exceed the first temperature threshold value TT1. Since the flow rate of the combustion gas guided to the internal combustion engine 2 is decreased, the discharge amount of ammonia can be decreased as much as possible while the discharge amount of the nitrogen oxide and the temperature of the exhaust gas can satisfy the limit value. The control device 3 performs the control such that the temperature of the exhaust gas satisfies the limit value. In this manner, damage caused by heat of the exhaust gas of a device, a pipe, or the like forming the exhaust gas discharge line 7 can be suppressed.

In the embodiment shown in FIG. 5, when any one of the determination condition that the amount ANO of the nitrogen oxide acquired by the nitrogen oxide amount acquisition unit 31 exceeds the first nitrogen oxide threshold value NOT1 and the determination condition that the temperature GT of the exhaust gas acquired by the exhaust gas temperature acquisition unit 35 exceeds the first temperature threshold value TT1 is satisfied ("No" in Step S2), the control device 3 determines whether the amount AA of the ammonia acquired by the ammonia amount acquisition unit 32 is equal to or smaller than the ammonia threshold value AT (Step S4).

In the embodiment shown in FIG. 5, the first operation mode control unit 34 is configured to switch the operation mode of the internal combustion engine 2 to the single-fuel combustion operation mode, when the co-combustion operation stopping condition is satisfied, the co-combustion operation stopping condition including both the determination condition that the temperature GT of the exhaust gas acquired by the exhaust gas temperature acquisition unit 35 exceeds the first temperature threshold value TT1 ("No" in Step S2) and the determination condition that the amount AA of the ammonia acquired by the ammonia amount acquisition unit 32 exceeds the ammonia threshold value AT ("No" in Step S4), in a state where the internal combustion engine 2 is operated in the co-combustion operation mode. The internal combustion engine 2 receives an instruction from the control device 3, stops the co-combustion operation, and proceeds to the single-fuel combustion operation (Step S8).

In some embodiments, as shown in FIG. 5, the flow rate control unit 33 is configured to give the flow rate increasing instruction for increasing the flow rate of the combustion gas guided to the internal combustion engine 2 to the flow rate adjustment device 10 (Step S6), when the flow rate increasing condition is satisfied, the flow rate increasing condition including both the determination condition that the amount AA of ammonia acquired by the ammonia amount acquisition unit 32 is equal to or smaller than the ammonia threshold value AT ("Yes" in Step S4) and the determination condition that the temperature GT of the exhaust gas acquired by the exhaust gas temperature acquisition unit 35 exceeds the second temperature threshold value TT2 ("Yes" in Step S5), in a state where the internal combustion engine 2 is operated in the co-combustion operation mode. The second temperature threshold value TT2 is the same value as the first temperature threshold value TT1, or is a value greater than the first temperature threshold value TT1.

In the embodiment shown in FIG. 5, the flow rate control unit 33 is configured to give the flow rate increasing instruction for increasing the flow rate of the combustion gas guided to the internal combustion engine 2 to the flow rate adjustment device 10 (Step S6), even when the flow rate increasing condition is satisfied, the flow rate increasing condition including both the determination condition that the amount AA of ammonia acquired by the ammonia amount acquisition unit 32 is equal to or smaller than the ammonia threshold value AT ("Yes" in Step S4) and the determination condition that the amount ANO of nitrogen oxide acquired by the nitrogen oxide amount acquisition unit 31 exceeds the second nitrogen oxide threshold value NOT2 ("Yes" in Step S5), in a state where the internal combustion engine 2 is operated in the co-combustion operation mode. In other words, the flow rate control unit 33 is configured to give the flow rate increasing instruction (Step S6), when any one of the determination condition relating to the temperature GT of the exhaust gas and the determination condition relating to the amount ANO of the nitrogen oxide is satisfied ("Yes" in Step S5), and when the determination condition relating to the amount AA of the ammonia is satisfied ("Yes" in Step S4), in a state where the internal combustion engine 2 is operated in the co-combustion operation mode.

The control device 3 decreases the flow rate of the combustion gas guided to the internal combustion engine 2 as much as possible such that the ammonia discharge amount can be decreased as much as possible. However, the exhaust gas temperature may suddenly increase due to a change in environmental conditions or the like. When the temperature GT of the exhaust gas acquired by the exhaust gas temperature acquisition unit 35 exceeds the second temperature threshold value TT2, the flow rate of the combustion gas guided to the internal combustion engine 2 can be increased such that the temperature GT of the exhaust gas satisfies the limit value.

As shown in FIG. 5, when it is determined whether or not the flow rate increasing condition is satisfied, in a case where the amount AA of ammonia acquired by the ammonia amount acquisition unit 32 is equal to or smaller than the ammonia threshold value AT ("Yes" in Step S4), the amount ANO of nitrogen oxide acquired by the nitrogen oxide amount acquisition unit 31 is smaller than the second nitrogen oxide threshold value NOT2, and the temperature GT of the exhaust gas acquired by the exhaust gas temperature acquisition unit 35 is smaller than the second temperature threshold value TT2 ("No" in Step S5), the control device 3 continues the co-combustion operation without giving the flow rate increasing instruction (Step S7).

In some embodiments, as shown in FIG. 1, the exhaust gas temperature acquisition unit 35 is configured to acquire the temperature of the exhaust gas flowing on the upstream side of the turbine 73 in the exhaust gas discharge line 7. In the shown embodiment, the temperature sensor 14 is provided in the exhaust gas pipe 71, and measures the temperature of the exhaust gas flowing through the exhaust gas pipe 71. The exhaust gas temperature acquisition unit 35 acquires a measurement result of the temperature sensor 14.

The upstream side of the turbine 73 in the exhaust gas discharge line 7 has a higher temperature than the downstream side of the turbine 73. The temperature of the exhaust gas flowing on the upstream side of the turbine 73 in the relatively high-temperature exhaust gas discharge line 7 is used for the control of the control device 3. In this manner, the control device 3 can more appropriately perform the control in which the exhaust gas temperature satisfies the limit value. In this manner, damage caused by the heat of the exhaust gas of the device, the pipe, or the like forming the exhaust gas discharge line 7 can be more effectively suppressed.

In some embodiments, as shown in FIG. 1, the control device 3 of the internal combustion engine 2 includes a parameter acquisition unit 36, an association information acquisition unit 37, and an operation condition determination unit 38. A control method for the internal combustion engine 2 according to some embodiments includes a parameter acquisition step of acquiring a plurality of parameters relating to an operation state of the internal combustion engine 2, an association information acquisition step of acquiring association information for associating the plurality of parameters with an operation condition in which the co-combustion operation mode is possible, and an operation condition determination step of determining whether or not the plurality of parameters acquired in the parameter acquisition step satisfy the operation condition in which the co-combustion operation mode is possible, based on the association information. In the following embodiment, the parameter acquisition step is performed by the parameter acquisition unit 36. The association information acquisition step is performed by the association information acquisition unit 37. The operation condition determination step is performed by the operation condition determination unit 38.

The parameter acquisition unit 36 is configured to acquire the plurality of parameters relating to the operation state of the internal combustion engine 2. The parameter acquisition unit 36 acquires the plurality of parameters from the internal combustion engine 2, devices mounted on the internal combustion engine 2, sensors, or the like. The sensor that acquires the parameters is not limited to those which physically measure the parameters, and may calculate the parameters by calculation, or may estimate the parameters from a measurement value of other sensors. The plurality of parameters relating to the operation state of the internal combustion engine 2 include a parameter relating to a rotation speed of the internal combustion engine 2 and a parameter relating to a load of the internal combustion engine 2. As the parameters, specifically, the rotation speed of the internal combustion engine 2, the load of the internal combustion engine 2, a fuel injection amount of the liquid fuel side injector 8, an intake pressure (pressure on the downstream side of the throttle valve 55 in the flow direction of the combustion gas of the second combustion gas pipe 53, or the like), an output of the generator 75, or the like can be used as examples.

The association information acquisition unit 37 is configured to acquire association information for associating the plurality of parameters with the operation condition in which the co-combustion operation mode is possible. The association information indicates a correspondence relationship between the plurality of parameters and the operation condition in which the co-combustion operation mode is possible, and when two or more types of the plurality of parameters are used as input information, the association information may be configured such that information relating to whether or not the operation condition corresponding to the plurality of parameters serving as the input information is the operation condition in which the co-combustion operation mode is possible can be acquired as output information. The association information includes a list, a table, a map, a function, a machine learning model, or the like indicating a correspondence relationship between the input information and the output information. The association information may be created, based on steady test data, or may be created, based on past actual values, experimental values, numerical analysis results, or the like other than the steady test data.

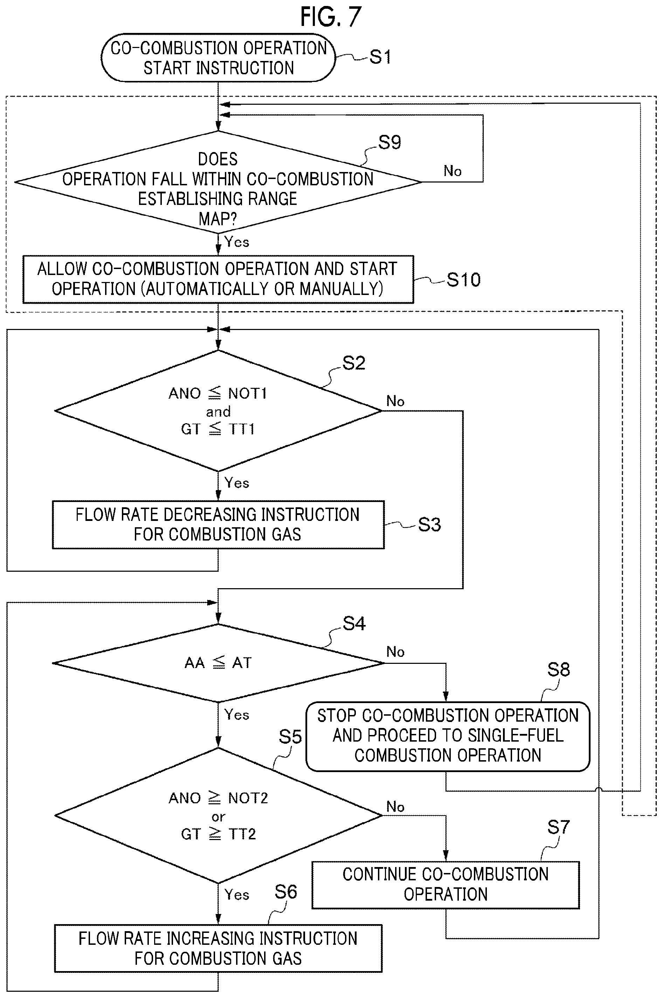

FIG. 7 is a control flow diagram of the internal combustion engine according to the embodiment of the present disclosure. The operation condition determination unit 38 is configured to determine whether or not the plurality of parameters acquired by the parameter acquisition unit 36 satisfy the operation condition, based on the association information acquired by the association information acquisition unit 37, in a state where the internal combustion engine 2 is operated in the single-fuel combustion operation mode (portion surrounded by a dotted line in FIG. 7) (Step S9).

The operation condition determination unit 38 monitors the plurality of parameters acquired by the parameter acquisition unit 36, which change at every moment, when the internal combustion engine 2 is operated in the single-fuel combustion operation mode, and determines whether or not the operation condition in which the co-combustion operation mode is possible is satisfied.

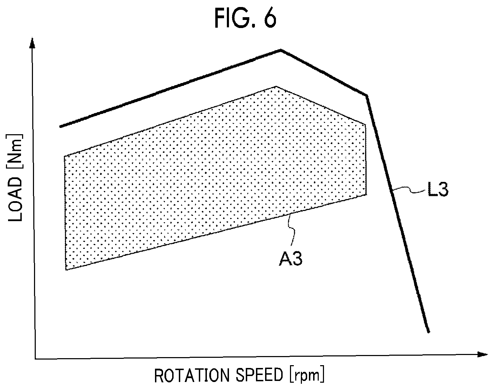

FIG. 6 is a view for describing a control map indicating a relationship between the rotation speed and the load of the internal combustion engine 2 and the operation condition in which the co-combustion operation is possible according to the embodiment of the present disclosure. In some embodiments, the association information is a control map indicating a relationship between the plurality of parameters and the operation condition in which the co-combustion operation mode is possible, as shown in FIG. 6, which is a control map in which a region A3 where the co-combustion operation mode is possible is set on a map configured to include the plurality of parameters. The operation condition determination unit 38 is configured to determine whether or not the plurality of parameters acquired by the parameter acquisition unit 36 satisfy the operation condition, by referring to the control map.

FIG. 6 shows a two-dimensional map in which the rotation speed of the internal combustion engine 2, which is one of the parameters, is represented by the horizontal axis and the load of the internal combustion engine 2, which is one of the parameters, is represented by the vertical axis. In the two-dimensional map shown in FIG. 6, the region A3 in which the co-combustion operation mode is possible under standard environmental conditions and a line L3 indicating a defined maximum torque are set in advance. The operation condition determination unit 38 can determine whether or not the operation state of the internal combustion engine 2 can be the co-combustion operation mode (whether or not the operation state belongs to the region A3) from the rotation speed and the load of the internal combustion engine 2 acquired by the parameter acquisition unit 36 by referring to the two-dimensional map shown in FIG. 6.

When it is determined whether or not the plurality of parameters acquired by the parameter acquisition unit 36 satisfy the operation condition, the operation condition determination unit 38 may refer to a two-dimensional map different from the two-dimensional map shown in FIG. 6 by at least one parameter, a three-dimensional map indicating a relationship between three types of parameters and the operation condition in which the co-combustion operation mode is possible, and the association information other than the control map. The operation condition determination unit 38 may refer to the association information stored in the storage unit 30 of the control device 3, or may refer to the association information stored in an external device of the control device 3.

The operation condition determination unit 38 can determine whether or not the plurality of parameters acquired by the parameter acquisition unit 36 satisfy the operation condition in which the co-combustion operation mode is possible. The control device 3 allows a switching operation to the co-combustion operation mode when a determination result in the operation condition determination unit 38 is satisfactory. In this manner, the control device 3 attempts to perform the co-combustion operation in the operation state where there is no prospect of establishing the co-combustion operation mode, and can suppress wasteful discharge of the ammonia. In addition, since the control map in which the region where the co-combustion operation mode is possible is set under the standard environmental conditions is used for the determination in the operation condition determination unit 38, it is possible to appropriately and quickly determine whether or not the operation state of the internal combustion engine 2 is in a state appropriate for the co-combustion operation mode.

In some embodiments, as shown in FIG. 1, the control device 3 of the internal combustion engine 2 includes a second operation mode control unit 39. As shown in FIG. 7, the second operation mode control unit 39 is configured to switch the operation mode of the internal combustion engine 2 to the co-combustion operation mode, when a co-combustion operable condition is satisfied, the co-combustion operable condition including a determination condition that the plurality of parameters satisfy the operation condition in which the co-combustion operation mode is possible, in a state where the internal combustion engine 2 is operated in the single-fuel combustion operation mode. The second operation mode control unit 39 of the control device 3 may automatically switch the operation mode of the internal combustion engine 2 to the co-combustion operation mode, when the co-combustion operable condition is satisfied. The internal combustion engine 2 receives an instruction from the control device 3, stops the single-fuel combustion operation, and proceeds to the co-combustion operation (Step S10). The control method for the internal combustion engine 2 according to some embodiments further includes a second operation mode control step of switching the operation mode of the internal combustion engine 2 to the co-combustion operation mode, when it is determined in the operation condition determination step that the co-combustion operable condition is satisfied. In the following embodiment, the second operation mode control step is performed by the second operation mode control unit 39 of the control device 3.

The co-combustion operable condition may further include a determination condition that the co-combustion operation mode is selected in the selection device 15. In this case, in a state where the plurality of parameters satisfy the operation conditions in which the co-combustion operation mode is possible, when the co-combustion operation mode is manually selected in the selection device 15, the second operation mode control unit 39 of the control device 3 switches the operation mode of the internal combustion engine 2 to the co-combustion operation mode (Step S10).

The control device 3 allows the switching operation to the co-combustion operation mode, when a determination result in the operation condition determination unit 38 is satisfactory. In this manner, the control device 3 can perform the switching to the co-combustion operation mode when the operation state of the internal combustion engine 2 is in a state appropriate for the co-combustion operation mode. The control device 3 can return to the co-combustion operation mode, even after the co-combustion operation mode is not established and the operation mode is switched to the single-fuel combustion operation mode, when the determination result in the operation condition determination unit 38 is satisfactory. In addition, even when the control device 3 first attempts to perform the switching to the co-combustion operation mode after the internal combustion engine 2 is driven, the control device 3 may allow the switching operation to the co-combustion operation mode, only in a limited case where the determination result in the operation condition determination unit 38 is satisfactory.

The storage unit 30 may store the threshold values (first nitrogen oxide threshold value NOT1, second nitrogen oxide threshold value NOT2, ammonia threshold value AT, first temperature threshold value TT1, and second temperature threshold value TT2). Each unit (flow rate control unit 33, first operation mode control unit 34, and second operation mode control unit 39) of the control device 3 may refer to the threshold values stored in the storage unit 30.

In the present specification, expressions of relative or absolute disposition such as "in a certain direction", "along a certain direction", "parallel", "orthogonal", "center", "concentric", or "coaxial" indicate not only the disposition in a strict sense, but also a state where the disposition is relatively displaced with a tolerance, or with an angle or a distance to such an extent that the same function can be obtained.

For example, expressions indicating that things are in an equal state such as "same", "equal", and "homogeneous" not only indicate an equal state in a strict sense, but also a state where a difference exists with a tolerance or to such an extent that the same function can be obtained.

In addition, in the present specification, an expression of a shape such as a rectangular shape and a cylindrical shape indicates not only the shape such as the rectangular shape and the cylindrical shape in a geometrically strict sense, but also a shape including an uneven portion or a chamfered portion within the range in which the same effect can be achieved.

In addition, in the present specification, expressions such as "being provided with", "including", and "having" one configuration element are not exclusive expressions excluding the presence of other configuration elements.

The present disclosure is not limited to the above-described embodiments, and also includes a form in which modifications are added to the above-described embodiments or a form in which the embodiments are appropriately combined with each other.

Contents described in some embodiments described above are understood as follows, for example.
1) According to at least one embodiment of the present disclosure, there is provided the control device (3) for the internal combustion engine (2) for controlling the operation of the internal combustion engine (2) configured to switch between the plurality of operation modes, the plurality of operation modes including the single-fuel combustion operation mode in which the liquid fuel is used as fuel, and the co-combustion operation mode in which both the liquid fuel and the ammonia gas are used as fuel. The control device (3) for the internal combustion engine (2) includes the nitrogen oxide amount acquisition unit (31) configured to acquire the amount of the nitrogen oxide in the exhaust gas discharged from the internal combustion engine (2), the ammonia amount acquisition unit (32) configured to acquire the amount of the ammonia in the exhaust gas discharged from the internal combustion engine (2), and the flow rate control unit (33) configured to give the flow rate adjustment instruction for adjusting the flow rate of the combustion gas guided to the internal combustion engine (2) to the flow rate adjustment device (10) configured to adjust the flow rate of the combustion gas guided to the internal combustion engine (2) such that the amount of the nitrogen oxide acquired by the nitrogen oxide amount acquisition unit (31) and the amount of the ammonia acquired by the ammonia amount acquisition unit (32) do not exceed their respective threshold values, in a state where the internal combustion engine (2) is operated in the co-combustion operation mode.
   According to the configuration of 1), since the combustion state or the like also changes when a change in the environmental conditions or the like occurs, the relationship of the discharge amount of the nitrogen oxide and the discharge amount of the ammonia with respect to the air excess ratio always changes. As the control parameter for adjusting the flow rate of the combustion gas guided to the internal combustion engine (2), instead of the air excess ratio, the control device (3) uses the amount of the nitrogen oxide acquired by the nitrogen oxide amount acquisition unit (31) and the amount of the ammonia acquired by the ammonia amount acquisition unit (33). The control device (3) can adjust the flow rate of the combustion gas such that the discharge amount of the nitrogen oxide and the discharge amount of the ammonia satisfy the limit value even when a change in the environmental conditions or the like occurs.
2) In some embodiments, in the control device (3) for the internal combustion engine (2) according to 1), the flow rate control unit (33) is configured to give the flow rate decreasing instruction for decreasing the flow rate of the combustion gas guided to the internal combustion engine (2) to the flow rate adjustment device (10), when the flow rate decreasing condition is satisfied, the flow rate decreasing condition including at least the determination condition that the amount (ANO) of the nitrogen oxide acquired by the nitrogen oxide amount acquisition unit (31) is equal to or smaller than the first nitrogen oxide threshold value (NOT1), in a state where the internal combustion engine (2) is operated in the co-combustion operation mode.
   According to the configuration of 2), the flow rate of the combustion gas guided to the internal combustion engine (2) can be decreased in a range in which the amount (ANO) of the nitrogen oxide acquired by the nitrogen oxide amount acquisition unit (31) does not exceed the first nitrogen oxide threshold value (NOT1). Since the flow rate of the combustion gas guided to the internal combustion engine (2) is decreased, the discharge amount of the ammonia can be decreased as much as possible while the discharge amount of the nitrogen oxide can satisfy the limit value.
3) In some embodiments, in the control device (3) for the internal combustion engine (2) according to 1), the flow rate control unit (33) is configured to give the flow rate increasing instruction for increasing the flow rate of the combustion gas guided to the internal combustion engine (2) to the flow rate adjustment device (10), when the flow rate increasing condition is satisfied, the flow rate increasing condition including both the determination condition that the amount (AA) of the ammonia acquired by the ammonia amount acquisition unit (32) is equal to or smaller than the ammonia threshold value (AT) and the determination condition that the amount (ANO) of the nitrogen oxide acquired by the nitrogen oxide amount acquisition unit (31) exceeds the second nitrogen oxide threshold value (NOT2), which is the same value as the first nitrogen oxide threshold value (NOT1) or which is a value greater than the first nitrogen oxide threshold value, in a state where the internal combustion engine is operated in the co-combustion operation mode.
   According to the configuration of 3), when the amount (ANO) of the nitrogen oxide acquired by the nitrogen oxide amount acquisition unit (31) exceeds the second nitrogen oxide threshold value (NOT2), the flow rate of the combustion gas guided to the internal combustion engine (2) can be increased such that the discharge amount of the nitrogen oxide satisfies the limit value.
**4) In** some embodiments, in the control device (3) for the internal combustion engine (2) according to any one of 1) to 3), the control device (3) further includes the first operation mode control unit (34) configured to switch the operation mode of the internal combustion engine (2) to the single-fuel combustion operation mode, when the co-combustion operation stopping condition is satisfied, the co-combustion operation stopping condition including both the determination condition that the amount (ANO) of the nitrogen oxide acquired by the nitrogen oxide amount acquisition unit (31) exceeds the first nitrogen oxide threshold value (NOT1) and the determination condition that the amount (AA) of the ammonia acquired by the ammonia amount acquisition unit (32) exceeds the ammonia threshold value (AT), in a state where the internal combustion engine (2) is operated in the co-combustion operation mode.
   According to the configuration of 4), when the co-combustion operation stopping condition is satisfied, in adjusting the flow rate of the combustion gas, it is difficult to continue the co-combustion operation such that both the discharge amount of the nitrogen oxide and the discharge amount of the ammonia satisfy the limit value. When the co-combustion operation stopping condition is satisfied, the control device (3) promptly stops the co-combustion operation, and switches the operation mode to the single-fuel combustion operation. In this manner, the discharge amount of the nitrogen oxide and the discharge amount of the ammonia can be promptly improved (decreased).
5) In some embodiments, in the control device (3) for the internal combustion engine (2) according to 2) or 3), the control device (3) further includes the exhaust gas temperature acquisition unit (35) configured to acquire the temperature of the exhaust gas, and the flow rate decreasing condition further includes the determination condition that the temperature (GT) of the exhaust gas acquired by the exhaust gas temperature acquisition unit (35) is equal to or smaller than the first temperature threshold value (TT1).
   According to the configuration of 5), the flow rate of the combustion gas guided to the internal combustion engine (2) can be decreased in a range where the amount (ANO) of the nitrogen oxide acquired by the nitrogen oxide amount acquisition unit (31) does not exceed the first nitrogen oxide threshold value (NOT1) and the temperature (GT) of the exhaust gas acquired by the exhaust gas temperature acquisition unit (35) does not exceed the first temperature threshold value (TT1). Since the flow rate of the combustion gas guided to the internal combustion engine (2) is decreased, the discharge amount of the ammonia can be decreased as much as possible while the discharge amount of the nitrogen oxide and the temperature of the exhaust gas can satisfy the limit value. The control device (3) performs the control such that the temperature of the exhaust gas satisfies the limit value. In this manner, damage caused by the heat of the exhaust gas of the device, the pipe, or the like forming the exhaust gas discharge line (7) through which the exhaust gas discharged from the internal combustion engine (2) flows can be suppressed.
6) In some embodiments, in the control device (3) for the internal combustion engine (2) according to 5), the flow rate control unit (33) is configured to give the flow rate increasing instruction for increasing the flow rate of the combustion gas guided to the internal combustion engine (2) to the flow rate adjustment device (10), when the flow rate increasing condition is satisfied, the flow rate increasing condition including both the determination condition that the amount (AA) of the ammonia acquired by the ammonia amount acquisition unit (32) is equal to or smaller than the ammonia threshold value (AT) and the determination condition that the temperature (GT) of the exhaust gas acquired by the exhaust gas temperature acquisition unit (35) exceeds the second temperature threshold value (TT2), which is the same value as the first temperature threshold value (TT1) or which is a value greater than the first temperature threshold value (TT1), in a state where the internal combustion engine (2) is operated in the co-combustion operation mode.
   According to the configuration of 6), when the temperature (GT) of the exhaust gas acquired by the exhaust gas temperature acquisition unit (35) exceeds the second temperature threshold value (TT2), the flow rate of the combustion gas guided to the internal combustion engine (2) can be increased such that the temperature (GT) of the exhaust gas satisfies the limit value.
7) In some embodiments, the control device (3) for the internal combustion engine (2) according to any one of 1) to 6) further includes the parameter acquisition unit (36) that acquires the plurality of parameters relating to the operation state of the internal combustion engine (2), the association information acquisition unit (37) that acquires the association information for associating the plurality of parameters with the operation condition in which the co-combustion operation mode is possible, and the operation condition determination unit (38) that determines whether or not the plurality of parameters acquired by the parameter acquisition unit (36) satisfy the operation condition, based on the association information acquired by the association information acquisition unit (37), in a state where the internal combustion engine (2) is operated in the single-fuel combustion operation mode.
   According to the configuration of 7), the operation condition determination unit (38) can determine whether or not the plurality of parameters acquired by the parameter acquisition unit (36) satisfy the operation condition in which the co-combustion operation mode is possible. The control device (3) allows the switching operation to the co-combustion operation mode when the determination result in the operation condition determination unit (38) is satisfactory. In this manner, the control device (3) attempts to perform the co-combustion operation in the operation state where there is no prospect of establishing the co-combustion operation mode, and can suppress wasteful discharge of the ammonia.
8) In some embodiments, in the control device (3) for the internal combustion engine (2) according to 7), the control device (3) further includes the second operation mode control unit (39) configured to switch the operation mode of the internal combustion engine (2) to the co-combustion operation mode, when the co-combustion operable condition is satisfied, the co-combustion operable condition including the determination condition that the plurality of parameters satisfy the operation condition, in a state where the internal combustion engine (2) is operated in the single-fuel combustion operation mode.
   According to the configuration of 8), the control device (3) allows the switching operation to the co-combustion operation mode when the determination result in the operation condition determination unit (38) is satisfactory. In this manner, the control device (3) can perform the switching to the co-combustion operation mode, when the operation state of the internal combustion engine (2) is in a state appropriate for the co-combustion operation mode. The control device (3) can return to the co-combustion operation mode, even after the co-combustion operation mode is not established and the operation mode is switched to the single-fuel combustion operation mode, when the determination result in the operation condition determination unit (38) is satisfactory.
9) In some embodiments, in the control device (3) for the internal combustion engine (2) according to 7) or 8), the association information includes the control map indicating the relationship between the plurality of parameters and the operation condition, which is the control map in which a region where the co-combustion operation mode is possible is set on the map configured to include the plurality of parameters.
   According to the configuration of 9), since the control map in which the region where the co-combustion operation mode is possible is set under the standard environmental conditions is used for the determination in the operation condition determination unit (38), it is possible to appropriately and quickly determine whether or not the operation state of the internal combustion engine (2) is in a state appropriate for the co-combustion operation mode.
10) In some embodiments, in the control device (3) for the internal combustion engine (2) according to any one of 1) to 9), the nitrogen oxide amount acquisition unit (31) is configured to acquire the amount of the nitrogen oxide in the exhaust gas flowing on the downstream side of the denitrification catalyst (77) for removing the nitrogen oxide in the exhaust gas discharge line (7) through which the exhaust gas discharged from the internal combustion engine (2) flows.
   According to the configuration of 10), the amount of the nitrogen oxide in the exhaust gas flowing on the downstream side of the denitrification catalyst (77) of the exhaust gas discharge line (7) is equal to the nitrogen oxide discharge amount actually discharged into the atmosphere. The amount of the nitrogen oxide in the exhaust gas flowing on the downstream side of the denitrification catalyst (77) of the exhaust gas discharge line (7), which is acquired by the nitrogen oxide amount acquisition unit (31), is used for the control in the control device (3). In this manner, the control device (3) can more appropriately perform the control in which the nitrogen oxide discharge amount satisfies the limit value.
11) In some embodiments, in the control device (3) for the internal combustion engine (2) according to any one of 1) to 10), the ammonia amount acquisition unit (32) is configured to acquire the amount of the ammonia in the exhaust gas flowing on the downstream side of the ammonia decomposition catalyst (78) for removing the ammonia in the exhaust gas discharge line (7) through which the exhaust gas discharged from the internal combustion engine (2) flows.
   According to the configuration of 11), the amount of the ammonia in the exhaust gas flowing on the downstream side of the ammonia decomposition catalyst (78) of the exhaust gas discharge line (7) is equal to the ammonia discharge amount actually discharged into the atmosphere. The amount of ammonia in the exhaust gas flowing on the downstream side of the ammonia decomposition catalyst (78) of the exhaust gas discharge line (7), which is acquired by the ammonia amount acquisition unit (32), is used for the control in the control device (3). In this manner, the control device (3) can more appropriately perform the control such that the ammonia discharge amount satisfies the limit value.
12) In some embodiments, in the control device (3) for the internal combustion engine (2) according to 5) or 6), the exhaust gas temperature acquisition unit (35) is configured to acquire the temperature of the exhaust gas flowing on the upstream side of a turbine (73) in the exhaust gas discharge line (7) through which the exhaust gas discharged from the internal combustion engine (2) flows.
   According to the configuration of 12), the upstream side of the turbine (73) in the exhaust gas discharge line (7) has a higher temperature than the downstream side of the turbine (73). The temperature of the exhaust gas flowing on the upstream side of the turbine (73) in the relatively high-temperature exhaust gas discharge line (7) is used for the control of the control device (3). In this manner, the control device (3) can more appropriately perform the control in which the exhaust gas temperature satisfies the limit value.
13) According to at least one embodiment of the present disclosure, there is provided the control method for the internal combustion engine (2) for controlling the operation of the internal combustion engine (2) configured to switch between the plurality of operation modes, the plurality of operation modes including the single-fuel combustion operation mode in which the liquid fuel is used as fuel, and the co-combustion operation mode in which both the liquid fuel and the ammonia gas are used as fuel. The control method for the internal combustion engine (2) includes the nitrogen oxide amount acquisition step of acquiring the amount of the nitrogen oxide in the exhaust gas discharged from the internal combustion engine (2), the ammonia amount acquisition step of acquiring the amount of the ammonia in the exhaust gas discharged from the internal combustion engine (2), and the flow rate control step of giving the flow rate adjustment instruction for adjusting the flow rate of the combustion gas guided to the internal combustion engine (2) to the flow rate adjustment device configured to adjust the flow rate of the combustion gas guided to the internal combustion engine (2) such that the amount of nitrogen oxide acquired in the nitrogen oxide amount acquisition step and the amount of ammonia acquired in the ammonia amount acquisition step do not exceed their respective threshold values, in a state where the internal combustion engine (2) is operated in the co-combustion operation mode.

According to the method of 13), since the combustion state or the like also changes when a change in the environmental conditions or the like occurs, the relationship of the discharge amount of the nitrogen oxide and the discharge amount of the ammonia with respect to the air excess ratio always changes. In the control method, as the control parameter for adjusting the flow rate of the combustion gas guided to the internal combustion engine (2), instead of the air excess ratio, the control device (3) uses the amount of the nitrogen oxide acquired in the nitrogen oxide amount acquisition step and the amount of the ammonia acquired in the ammonia amount acquisition step. According to this control method, the control device (3) can adjust the flow rate of the combustion gas such that the discharge amount of the nitrogen oxide and the discharge amount of the ammonia satisfy the limit value even when a change in the environmental conditions or the like occurs.

### Reference Signs List

1: internal combustion engine system
2: internal combustion engine
3: control device
4: liquid fuel introduction line
5: combustion gas introduction line
6: ammonia gas introduction line
7: exhaust gas discharge line
8: liquid fuel side injector
9: ammonia side injector
10: flow rate adjustment device
11: turbocharger
12: nitrogen oxide sensor
13: ammonia sensor
14: temperature sensor
15: selection device
21: cylinder
22: combustion chamber
30: storage unit
31: nitrogen oxide amount acquisition unit
32: ammonia amount acquisition unit
33: flow rate control unit
34: first operation mode control unit
35: exhaust gas temperature acquisition unit
36: parameter acquisition unit
37: association information acquisition unit
38: operation condition determination unit
39: second operation mode control unit
41: common rail
42: branch pipe
43: supply source of liquid fuel
44: liquid fuel pipe
45: pressure increasing device
51: compressor
52: first combustion gas pipe
53: second combustion gas pipe
54: intake side branch pipe
55: throttle valve
56: intercooler
61: supply source of ammonia gas
62: ammonia gas pipe
63: ammonia gas side branch pipe
71: exhaust gas pipe
72: exhaust gas side branch pipe
73: turbine
74: rotary shaft
75: generator
76: exhaust gas connection pipe
77: denitrification catalyst
78: ammonia decomposition catalyst
79: exhaust gas discharge pipe
AA: amount of ammonia
ANO: amount of nitrogen oxide
AT: ammonia threshold value
GT: exhaust gas temperature
NOT1: first nitrogen oxide threshold value
NOT2: second nitrogen oxide threshold value
TT1: first temperature threshold value
TT2: second temperature threshold value

## Claims

1. A control device for an internal combustion engine for controlling an operation of an internal combustion engine configured to switch between a plurality of operation modes, the plurality of operation modes including a single-fuel combustion operation mode in which a liquid fuel is used as fuel, and a co-combustion operation mode in which both the liquid fuel and an ammonia gas are used as fuel, the control device for an internal combustion engine comprising:
a nitrogen oxide amount acquisition unit configured to acquire the amount of nitrogen oxide in an exhaust gas discharged from the internal combustion engine;
an ammonia amount acquisition unit configured to acquire the amount of ammonia in the exhaust gas discharged from the internal combustion engine; and
a flow rate control unit configured to give a flow rate adjustment instruction for adjusting a flow rate of a combustion gas guided to the internal combustion engine to a flow rate adjustment device configured to adjust the flow rate of the combustion gas guided to the internal combustion engine such that the amount of the nitrogen oxide acquired by the nitrogen oxide amount acquisition unit and the amount of the ammonia acquired by the ammonia amount acquisition unit do not exceed their respective threshold values, in a state where the internal combustion engine is operated in the co-combustion operation mode.

2. The control device for an internal combustion engine according to Claim 1,
wherein the flow rate control unit is configured to give a flow rate decreasing instruction for decreasing the flow rate of the combustion gas guided to the internal combustion engine to the flow rate adjustment device, when a flow rate decreasing condition is satisfied, the flow rate decreasing condition including at least a determination condition that the amount of the nitrogen oxide acquired by the nitrogen oxide amount acquisition unit is equal to or smaller than a first nitrogen oxide threshold value, in a state where the internal combustion engine is operated in the co-combustion operation mode.

3. The control device for an internal combustion engine according to Claim 2,
wherein the flow rate control unit is configured to give a flow rate increasing instruction for increasing the flow rate of the combustion gas guided to the internal combustion engine to the flow rate adjustment device, when a flow rate increasing condition is satisfied, the flow rate increasing condition including both a determination condition that the amount of the ammonia acquired by the ammonia amount acquisition unit is equal to or smaller than an ammonia threshold value and a determination condition that the amount of the nitrogen oxide acquired by the nitrogen oxide amount acquisition unit exceeds a second nitrogen oxide threshold value, which is the same value as the first nitrogen oxide threshold value or which is a value greater than the first nitrogen oxide threshold value, in a state where the internal combustion engine is operated in the co-combustion operation mode.

4. The control device for an internal combustion engine according to any one of Claims 1 to 3, further comprising:
a first operation mode control unit configured to switch the operation mode of the internal combustion engine to the single-fuel combustion operation mode, when a co-combustion operation stopping condition is satisfied, the co-combustion operation stopping condition including both a determination condition that the amount of the nitrogen oxide acquired by the nitrogen oxide amount acquisition unit exceeds a first nitrogen oxide threshold value and a determination condition that the amount of the ammonia acquired by the ammonia amount acquisition unit exceeds an ammonia threshold value, in a state where the internal combustion engine is operated in the co-combustion operation mode.

5. The control device for an internal combustion engine according to Claim 2 or 3, further comprising:
an exhaust gas temperature acquisition unit configured to acquire a temperature of the exhaust gas,
wherein the flow rate decreasing condition further includes a determination condition that the temperature of the exhaust gas acquired by the exhaust gas temperature acquisition unit is equal to or smaller than a first temperature threshold value.

6. The control device for an internal combustion engine according to Claim 5,
wherein the control device is configured to give a flow rate increasing instruction for increasing the flow rate of the combustion gas guided to the internal combustion engine to the flow rate adjustment device, when a flow rate increasing condition is satisfied, the flow rate increasing condition including both a determination condition that the amount of the ammonia acquired by the ammonia amount acquisition unit is equal to or smaller than an ammonia threshold value and a determination condition that the temperature of the exhaust gas acquired by the exhaust gas temperature acquisition unit exceeds a second temperature threshold value, which is the same value as the first temperature threshold value or which is a value greater than the first temperature threshold value, in a state where the internal combustion engine is operated in the co-combustion operation mode.

7. The control device for an internal combustion engine according to any one of Claims 1 to 3, further comprising:
a parameter acquisition unit that acquires a plurality of parameters relating to an operation state of the internal combustion engine;
an association information acquisition unit that acquires association information for associating the plurality of parameters with an operation condition in which the co-combustion operation mode is possible; and
an operation condition determination unit that determines whether or not the plurality of parameters acquired by the parameter acquisition unit satisfy the operation condition, based on the association information acquired by the association information acquisition unit, in a state where the internal combustion engine is operated in the single-fuel combustion operation mode.

8. The control device for an internal combustion engine according to Claim 7, further comprising:
a second operation mode control unit configured to switch the operation mode of the internal combustion engine to the co-combustion operation mode, when a co-combustion operable condition is satisfied, the co-combustion operable condition including a determination condition that the plurality of parameters satisfy the operation condition, in a state where the internal combustion engine is operated in the single-fuel combustion operation mode.

9. The control device for an internal combustion engine according to Claim 7,
wherein the association information includes a control map indicating a relationship between the plurality of parameters and the operation condition, the control map in which a region where the co-combustion operation mode is possible is set on a map configured to include the plurality of parameters.

10. The control device for an internal combustion engine according to any one of Claims 1 to 3,
wherein the nitrogen oxide amount acquisition unit is configured to acquire the amount of the nitrogen oxide in the exhaust gas flowing on a downstream side of a denitrification catalyst for removing the nitrogen oxide in an exhaust gas discharge line through which the exhaust gas discharged from the internal combustion engine flows.

11. The control device for an internal combustion engine according to any one of Claims 1 to 3,
wherein the ammonia amount acquisition unit is configured to acquire the amount of the ammonia in the exhaust gas flowing on a downstream side of an ammonia decomposition catalyst for removing the ammonia in an exhaust gas discharge line through which the exhaust gas discharged from the internal combustion engine flows.

12. The control device for an internal combustion engine according to Claim 5,
wherein the exhaust gas temperature acquisition unit is configured to acquire a temperature of the exhaust gas flowing on an upstream side of a turbine in an exhaust gas discharge line through which the exhaust gas discharged from the internal combustion engine flows.

13. A control method for an internal combustion engine for controlling an operation of an internal combustion engine configured to switch between a plurality of operation modes, the plurality of operation modes including a single-fuel combustion operation mode in which a liquid fuel is used as fuel, and a co-combustion operation mode in which both the liquid fuel and an ammonia gas are used as fuel, the control method for an internal combustion engine comprising:
a nitrogen oxide amount acquisition step of acquiring the amount of nitrogen oxide in an exhaust gas discharged from the internal combustion engine;
an ammonia amount acquisition step of acquiring the amount of ammonia in the exhaust gas discharged from the internal combustion engine; and
a flow rate control step of giving a flow rate adjustment instruction for adjusting a flow rate of a combustion gas guided to the internal combustion engine to a flow rate adjustment device configured to adjust the flow rate of the combustion gas guided to the internal combustion engine such that the amount of the nitrogen oxide acquired in the nitrogen oxide amount acquisition step and the amount of the ammonia acquired in the ammonia amount acquisition step do not exceed their respective threshold values, in a state where the internal combustion engine is operated in the co-combustion operation mode.
